# EUROPEAN PATENT SPECIFICATION

(11) **EP 3 491 786 B1**
(45) Date of publication and mention of the grant of the patent: **13.05.2020**
(21) Application number: 17737133.3
(22) Date of filing: 26.06.2017
(51) Int. Cl.: G06F 13/22, G06F 13/24, G06F 13/364, G06F 13/00, G06F 13/42, G06F 13/40

(54) **SLAVE INITIATED INTERRUPTS FOR A COMMUNICATION BUS**
SLAVE-INITIIERTE UNTERBRECHUNGEN FÜR EINEN KOMMUNIKATIONSBUS
INTERRUPTIONS DÉCLENCHÉES PAR ESCLAVE POUR UN BUS DE COMMUNICATION

(30) Priority: 26.07.2016 US 201615220077
(43) Date of publication of application: 05.06.2019
(73) Proprietor: Qualcomm Incorporated, San Diego, CA 92121-1714 (US)
(72) Inventor: MISHRA, Lalan, Jee, San Diego, California 92121 (US); O'SHEA, Helena, Deirdre, San Diego, California 92121 (US); WIETFELDT, Richard, Dominic, San Diego, California 92121 (US)
(74) Representative: Tomkins & Co
(86) International application number: PCT/US2017/039194
(87) International publication number: WO 2018/022230

(56) References cited:
- WO-A1-03/096036
- US-A1- 2007 186 021
- US-A1- 2014 325 103
- US-A1- 2014 337 553
- US-A1- 2015 261 708
- US-B1- 7 089 338
- Peter B. Lefkin: "MIPI Alliance : A brief Introduction", internet MIPI Alliance, 17 February 2015 (2015-02-17), pages 1-31, XP002774146, Retrieved from the Internet: URL:https://mipi.org/sites/default/files/1 50217%20MIPI%20Alliance%20Webcast%20RFFEv2 .0%20presentation%20slides.pdf [retrieved on 2017-09-25]
- Jimm Ross, John Oakley: "An Overview of RFFE and Implementation Benefits", internet MIPI Alliance, 12 March 2015 (2015-03-12), pages 1-18, XP002774147, Retrieved from the Internet: URL:https://mipi.org/sites/default/files/R FFE_v2.0_Implementation.pdf [retrieved on 2017-09-25]
- Victor Wilkerson, Gernot Hueber: "A look at the MIPI RFFE standard", internet EE Times-Asia, 30 March 2011 (2011-03-30), pages 1-3, XP002774188, Retrieved from the Internet: URL:http://archive.eetasia.com/www.eetasia .com/STATIC/PDF/201103/EEOL_2011MAR30_RFD_ INT_TA_01.pdf?SOURCES=DOWNLOAD [retrieved on 2017-09-26]

## Description

### PRIORITY APPLICATION

### BACKGROUND

### I. Field of the Disclosure

The technology of the disclosure relates generally to interrupt signaling on a communication bus.

### II. Background

Computing devices have become increasingly common in modern society. Mobile phones are among the more common computing devices. While such devices may initially have started out as simple devices that allowed audio communication through the Public Land Mobile Network (PLMN) to the Public Standard Telephone Network (PSTN), they have evolved into smart phones capable of supporting full multimedia experiences as well as supporting multiple wireless protocols. Even within the cellular wireless protocols, mobile phone radios have developed into highly complex, multi-band, and multi-standard designs that often have multiple radio frequency (RF) signal chains. Every component in the RF signal chain has to be in the desired configuration at any given time, or the system will fail. Therefore, accurate timing, triggers, and speed are all necessary.

As further explained on the MIPI Alliance® website, "[t]he *MIPI Alliance Specification for RF Front-End Control Interface* (RFFE) was developed to offer a common and widespread method for controlling RF front-end devices. There are a variety of front-end devices, including Power Amplifiers (PA), Low-Noise Amplifiers (LNA), filters, switches, power management modules, antenna tuners and sensors. These functions may be located either in separate devices or integrated into a single device, depending on the application. The trend in mobile radio communications is towards complex multi-radio systems comprised of several parallel transceivers. This implies a leap in complexity of the RF front-end design. Thus, the RFFE bus must be able to operate efficiently in configurations from the simplest one Master and one Slave configuration to, potentially, multi-Master configurations with tens of Slaves."

In devices having an RFFE bus, the RFFE protocol dictates that the master periodically polls the slaves on the RFFE bus to determine if the slaves have an interrupt condition. Exemplary slaves include antenna switches and low noise amplifiers. In a typical implementation, this polling occurs once per millisecond. Cellular protocols are becoming increasingly stringent with latency issues and the mobile device may not be compliant with a particular cellular protocol if the master waits a full millisecond to poll an antenna switch. If the polling merely occurs more frequently, the polling may create an unwanted power drain as numerous polling cycles result in negative acknowledgments from the slaves. Accordingly, cellular protocol compliance and power savings may be effectuated with a better interrupt techniques for RFFE buses. Non-patent literature "MIPI Alliance: A Brief Introduction", Peter B. Lefkin, 17 Feb 2015, provides an overview of the MIPI Alliance and the RFFE protocol. Non-patent literature "An Overview of RFFE and Implementation Benefits", Jimm Ross et al. 12 March 2015, provides an overview of some of the benefits of implementing the RFFE protocol. International Patent Application Publication No. WO 03/096036 A1 relates to a single wire communication bus for miniature low-power systems.

### SUMMARY OF THE DISCLOSURE

Aspects disclosed in the detailed description include slave initiated interrupts for a communication bus. In an exemplary aspect, the communication bus is a radio frequency front end (RFFE) bus, and a slave is allowed to indicate to a master on the RFFE bus that the slave has an interrupt condition. On receipt of a slave initiated interrupt, the master may initiate a polling sequence to determine which of a plurality of slaves associated with the RFFE bus initiated the interrupt and process the interrupt accordingly. Continuing the exemplary aspect, the slave may indicate the interrupt condition to the master by driving a clock line of the RFFE bus to a non-idle state. The master may detect this manipulation of the clock line and initiate the polling sequence. By relying on the slave to initiate an indication of an interrupt, polling may begin before a periodic polling activity, which in turn may reduce latency and allow compliance with increasingly strict cellular protocols. Further, as unneeded periodic polling may be eliminated or a period increased, power savings may be effectuated.

In this regard in one aspect, a method for detecting an interrupt from a slave on an RFFE bus is disclosed. The method includes holding a clock line within an RFFE bus at a logical low when the RFFE bus is idle. The method also includes detecting, while the RFFE bus is idle, with detection circuitry at a master associated with the RFFE bus, a logical high on the clock line. The method also includes initiating an interrupt inquiry from the master.

In another aspect, a master is disclosed. The master includes an RFFE interface configured to be coupled to an RFFE bus. The master also includes a clock source coupled to the RFFE interface. The master also includes a transceiver coupled to the RFFE interface. The master also includes a detection circuit coupled to the RFFE interface. The detection circuit is configured to detect when a clock line of the RFFE bus is pulled high by a slave associated with the RFFE bus. The detection circuit is also configured to initiate an interrupt inquiry through the transceiver.

In another aspect, a method for a slave signaling an interrupt on an RFFE bus is disclosed. The method includes, at a slave coupled to an RFFE bus, detecting an interrupt condition within the slave. The method also includes, at the slave, driving a clock line of the RFFE bus from an idle state to a modified state to indicate the interrupt condition at the slave to a master. The method also includes subsequently responding to an interrupt inquiry from the master.

In another aspect, a slave is disclosed. The slave includes an RFFE interface configured to couple to an RFFE bus. The slave also includes a transceiver coupled to the RFFE interface. The slave also includes an interrupt circuit coupled to the RFFE interface. The interrupt circuit is configured to receive an indication that the slave has an interrupt condition. The interrupt circuit is also configured to drive a clock line in the RFFE bus from an idle state to a modified state.

### BRIEF DESCRIPTION OF THE FIGURES

Figure 1 is system-level block diagram of an exemplary mobile terminal configured to communicate based on MIPI Alliance® (MIPI) defined architecture;
Figure 2 is a simplified block diagram of a master and a slave on a radio frequency front end (RFFE) bus capable of slave initiated interrupts according to an exemplary aspect of the present disclosure;
Figure 3 is a flowchart illustrating an exemplary process conducted by a slave for initiating an interrupt on an RFFE bus; and
Figure 4 is a flowchart illustrating an exemplary process conducted by a master for detecting a slave initiated interrupt on an RFFE bus.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include slave initiated interrupts for a communication bus. In an exemplary aspect, the communication bus is a radio frequency front end (RFFE) bus, and a slave is allowed to indicate to a master on the RFFE bus that the slave has an interrupt condition. On receipt of a slave initiated interrupt, the master may initiate a polling sequence to determine which of a plurality of slaves associated with the RFFE bus initiated the interrupt and process the interrupt accordingly. Continuing the exemplary aspect, the slave may indicate the interrupt condition to the master by driving a clock line of the RFFE bus to a non-idle state. The master may detect this manipulation of the clock line and initiate the polling sequence. By relying on the slave to initiate an indication of an interrupt, polling may begin before a periodic polling activity, which in turn may reduce latency and allow compliance with increasingly strict cellular protocols. Further, as unneeded periodic polling may be eliminated or a period increased, power savings may be effectuated.

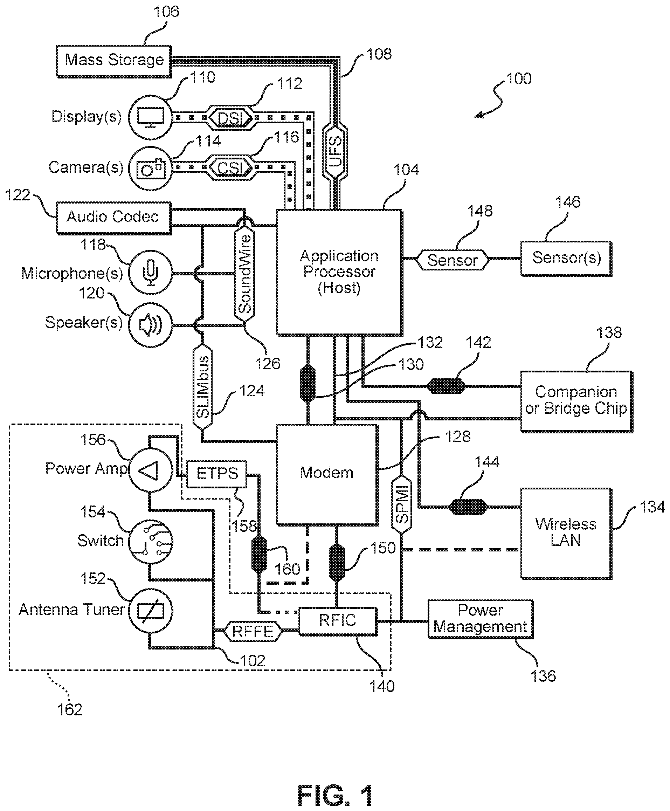

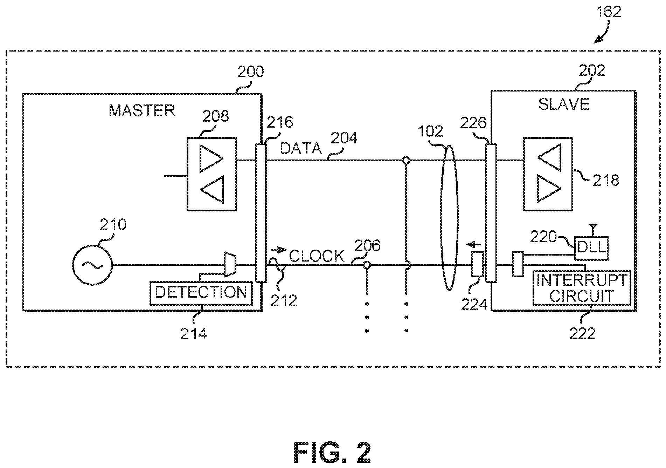

Before discussing exemplary aspects of slave initiated interrupts for a communication bus that include specific aspects of the present disclosure, a brief overview of a mobile terminal configured based on MIPI Alliance® (MIPI) defined architecture is first provided in Figure 1. The discussion of specific exemplary aspects of slave initiated interrupts for a communication bus starts with reference to Figure 2.

In this regard, Figure 1 is system-level block diagram of an exemplary mobile terminal 100 such as a smart phone, mobile computing device tablet, or the like. While a mobile terminal is particularly contemplated as being capable of benefiting from exemplary aspects of the present disclosure, it should be appreciated that the present disclosure is not so limited and may be useful in any system having a bus that has multiple masters and needing priority-based bus access with minimal latency. For the sake of illustration, it is assumed that an RFFE bus 102 within the mobile terminal 100 is among multiple communication buses configured to support slave initiated interrupts according to the present disclosure.

With continued reference to Figure 1, the mobile terminal 100 includes an application processor 104 (sometimes referred to as a host) that communicates with a mass storage element 106 through a universal flash storage (UFS) bus 108. The application processor 104 may further be connected to a display 110 through a display serial interface (DSI) bus 112 and a camera 114 through a camera serial interface (CSI) bus 116. Various audio elements such as a microphone 118, a speaker 120, and an audio codec 122 may be coupled to the application processor 104 through a serial low power interchip multimedia bus (SLIMbus) 124. Additionally, the audio elements may communicate with each other through a SOUNDWIRE™ bus 126. A modem 128 may also be coupled to the SLIMbus 124. The modem 128 may further be connected to the application processor 104 through a peripheral component interconnect (PCI) or PCI express (PCIe) bus 130 and/or a system power management interface (SPMI) bus 132.

With continued reference to Figure 1, the SPMI bus 132 may also be coupled to a wireless local area network (WLAN) integrated circuit (IC) (WLAN IC) 134, a power management integrated circuit (PMIC) 136, a companion integrated circuit (sometimes referred to as a bridge chip) 138, and a radio frequency integrated circuit (RFIC) 140. It should be appreciated that separate PCI buses 142 and 144 may also couple the application processor 104 to the companion integrated circuit 138 and the WLAN IC 134. The application processor 104 may further be connected to sensors 146 through a sensor bus 148. The modem 128 and the RFIC 140 may communicate using a bus 150.

With continued reference to Figure 1, and of particular interest for the present disclosure, the RFIC 140 may couple to one or more RFFE elements, such as an antenna tuner 152, a switch 154, and a power amplifier 156 through the RFFE bus 102. Additionally, the RFIC 140 may couple to an envelope tracking power supply (ETPS) 158 through a bus 160, and the ETPS 158 may communicate with the power amplifier 156. Collectively, the RFFE elements, including the RFIC 140, may be considered an RFFE system 162.

Within the RFFE system 162 there is at least one master and typically at least one slave. The RFFE protocol contemplates a master with up to fifteen slaves. In the absence of the present disclosure, the master will periodically poll the slaves to see if any of the slaves have interrupt conditions that need to be addressed. The period between polling events adds latency to the system. Further, if the master polls and there are no interrupt conditions, then power may have been consumed needlessly. While there may be devices that are not concerned with power consumption because such devices may have access to a wall outlet and continuous power, other devices, such as battery powered mobile terminals, try to limit power consumption as much as possible so as to extend battery life. To alleviate such latency and power consumption, exemplary aspects of the present disclosure allow the slaves to initiate an interrupt indication to the master over the RFFE bus 102. In this regard, the master and slave are modified as better illustrated in Figure 2.

Figure 2 illustrates the RFFE system 162 of Figure 1 with a master 200 and a slave 202 communicatively coupled by the RFFE bus 102. In exemplary aspects, a typical master is a modem baseband processor containing largely digital logic or a modem radio frequency integrated circuit. Additionally, typical slaves may include antenna tuners, power amplifiers, low noise amplifiers, or the like. While only one slave is illustrated, it should be appreciated that up to fifteen slaves may be coupled to the RFFE bus 102. It should be appreciated that there may be multiple masters in an RFFE system and slaves may be controlled by multiple masters as determined by a bus arbitration mechanism. The RFFE bus 102 is a two-wire bus with a data line 204 and a clock line 206. The master 200 may include a transceiver 208 that sends and receives data on the data line 204. The master 200 may further include a clock source 210 that selectively provides a clock signal 212 on the clock line 206. The master 200 may further include a detection circuit 214 that detects signals on the clock line 206. The master 200 may further include an interface 216 that is configured to be coupled to the RFFE bus 102. Similarly, the slave 202 may include a transceiver 218 that sends and receives data on the data line 204. The slave 202 may further include a delay locked loop (DLL) 220 that receives the clock signal 212 and generates a local clock signal for the slave 202. The slave 202 may also have an interrupt circuit 222 that is designed to provide an interrupt signal 224 on the clock line 206 as better explained in greater detail below. The slave 202 is coupled to the RFFE bus 102 through an interface 226. According to the RFFE protocol, the data line 204 and the clock line 206 are maintained at a logical low when the lines 204 and 206 are idle. When the interrupt circuit 222 detects that the slave 202 has an interrupt condition, the interrupt circuit 222 pulls the clock line 206 to a logical high with the interrupt signal 224. In an exemplary aspect, interrupt conditions may arise when a slave determines an error condition of data received at the slave or the slave desiring master support, such as updating a configuration register to change the gain of a low noise amplifier (LNA) (e.g., the slave determines the signal level required and has an interrupt condition for the master to issue an LNA gain change) or the like. The detection circuit 214 detects the logical high from the interrupt signal 224 and determines that one of the slaves (e.g., the slave 202) has an interrupt condition and may then initiate polling the slaves to determine which slave has the interrupt condition.

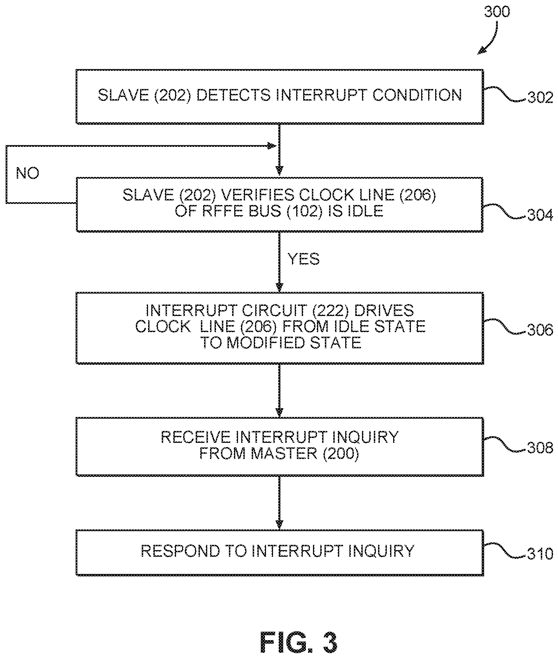

In this regard, Figure 3 illustrates a process 300 whereby the slave 202 initiates the interrupt rather than reacting to interrupt polling from the master 200. Initially, the slave 202 detects an interrupt condition within the slave 202 (block 302). For example, if the slave 202 is an antenna switch, the interrupt condition may be an error condition in a nominal data transfer or changing RF conditions which require master resolution. The slave 202 verifies that the clock line 206 of the RFFE bus 102 is idle (block 304). Once the clock line 206 is idle, the slave 202 uses the interrupt circuit 222 to drive the clock line 206 from an idle state to a modified state (block 306). In an exemplary aspect, the idle state is a logical low and the modified state is a logical high. After signaling the interrupt condition to the master in this fashion, the master 200 will begin an interrupt inquiry which will cause the slave 202 to receive the interrupt inquiry from the master 200 (block 308). The slave 202 will then respond to the interrupt inquiry (block 310), indicating a slave identity and a nature of the interrupt so that the interrupt may be handled appropriately by the master 200.

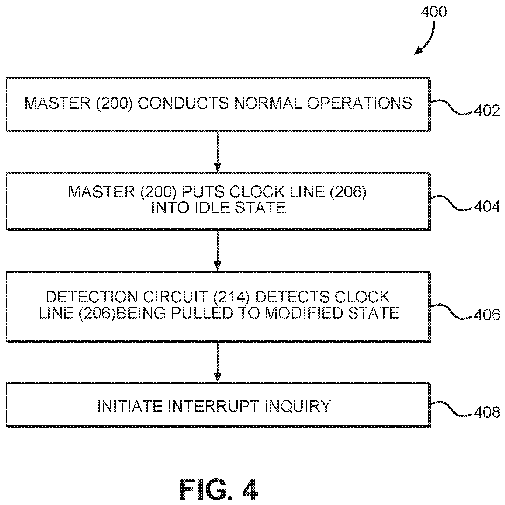

While Figure 3 is set up to show the process 300 for the slave 202, Figure 4 provides a flowchart of process 400 for the master 200. In this regard, the master 200 conducts normal operations (block 402). When operations reach a lull, the master 200 puts the clock line 206 into an idle state (block 404). As noted above, in an exemplary aspect, the idle state of the clock line 206 is a logical low. When the slave 202 has an interrupt condition, the slave 202 pulls the clock line 206 to a modified state, and the detection circuit 214 detects that the clock line 206 has been pulled to the modified state (block 406). In an exemplary aspect, the modified state is a logical high. The detection circuit 214 reports this slave initiated interrupt and the master 200 initiates an interrupt inquiry (block 408).

The master 200 may perform the interrupt inquiry in many different forms. In an exemplary aspect, the interrupt inquiry is a simple polling of the slaves on the RFFE bus 102. This polling may be done in ascending order by address or descending order by address. In still another exemplary aspect, the polling may step through the addresses using odd addresses first, then even addresses or vice versa such that the even addresses are polled first, then the odd addresses. In still another exemplary aspect, the master 200 may know that only a subset of the slaves associated with the RFFE bus 102 are authorized to request an interrupt, and the master 200 may poll only those authorized slaves. In still another exemplary aspect, the master 200 may have a look-up table that indicates an order in which the slaves are polled. In still another exemplary aspect, the master 200 may poll the slaves using a weighted order where slaves that are more likely to have an interrupt are polled before slaves that are less likely to have an interrupt. Likewise, the weighting may be based on quality of service requirements. For example certain slaves 202 may have a higher priority in getting services. As a specific example, an antenna tuner may be serviced before an antenna switch. Such weighting and ordering of service may have a discernable and detectable impact on the radio quality and thus the user experience.

The slave initiated interrupts for a communication bus according to aspects disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a smart phone, a tablet, a phablet, a server, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, a portable digital video player, and an automobile.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The master devices, and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flowchart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. A method (400) for detecting, at a master (200), an interrupt from a slave (202) on a radio frequency front end, RFFE, bus (102), the method comprising the steps of:
holding (404) a clock line (206) of the RFFE bus at a logical low when the RFFE bus is idle;
detecting (406), while the RFFE bus is idle, with detection circuitry (214) at the master (200) associated with the RFFE bus, a logical high on the clock line; and
initiating (408) an interrupt inquiry from the master.

2. The method of claim 1, wherein the step of initiating the interrupt inquiry comprises the step of polling slaves associated with the RFFE bus.

3. The method of claim 1, wherein the step of initiating the interrupt inquiry comprises the step of performing a weighted polling of slaves associated with the RFFE bus.

4. The method of claim 1, wherein the step of initiating the interrupt inquiry comprises the step of polling only slaves associated with the RFFE bus that are authorized to provide interrupts.

5. The method of claim 1, further comprising the step of driving the clock line with a clock signal when the RFFE bus is not idle.

6. The method of claim 1, wherein the step of initiating the interrupt inquiry comprises the step of initiating the interrupt inquiry before a period for polling has passed.

7. The method of claim 1, wherein the step of initiating the interrupt inquiry comprises one of the steps of polling slaves having even addresses followed by polling slaves having odd addresses or polling the slaves having the odd addresses followed by polling the slaves having the even addresses.

8. The method of claim 1, wherein the step of initiating the interrupt inquiry comprises the step of using a look-up table to define an order in which slaves are polled.

9. The method of claim 1, wherein the step of initiating the interrupt inquiry comprises the step of polling slaves based on an ascending address sequence.

10. The method of claim 1, wherein the step of initiating the interrupt inquiry comprises the step of polling slaves based on a descending address sequence.

11. A master comprising:
a radio frequency front end, RFFE, interface (216) configured to be coupled to an RFFE bus (102);
a clock source (210) coupled to the RFFE interface;
a transceiver (208) coupled to the RFFE interface; and
a detection circuit (214) coupled to the RFFE interface and configured to:
detect when a clock line (206) of the RFFE bus is pulled high by a slave (202) associated with the RFFE bus; and
initiate an interrupt inquiry through the transceiver.

12. A method for a slave signaling an interrupt on a radio frequency front end, RFFE, bus, the method comprising the steps of:
at the slave coupled to the RFFE bus, detecting an interrupt condition within the slave;
at the slave, driving a clock line of the RFFE bus from an idle state to a modified state to indicate the interrupt condition at the slave to a master; and
subsequently responding to an interrupt inquiry from the master.

13. The method of claim 12, wherein the step of driving the clock line to the modified state comprises the step of pulling the clock line to a logical high.

14. The method of claim 12, wherein the step of driving the clock line comprises the step of waiting for the clock line to be idle before driving the clock line.

15. A slave (202) comprising:
a radio frequency front end, RFFE, interface (226) configured to couple to an RFFE bus (102);
a transceiver (218) coupled to the RFFE interface; and
an interrupt circuit (222) coupled to the RFFE interface configured to:
receive an indication that the slave has an interrupt condition; and
drive a clock line (206) of the RFFE bus from an idle state to a modified state.

## Patentansprüche

1. Ein Verfahren (400) zum Detektieren, an einem Master (200), eines Interrupts von einem Slave (202) auf einem RFFE-Bus (RFFE = radio frequency front end bzw. Funkfrequenz-Frontend) (102), wobei das Verfahren die folgenden Schritte aufweist:
Halten (404) einer Taktleitung (206) des RFFE-Busses auf einem Logisch-Tief-Zustand, wenn der RFFE-Bus im Leerlauf ist;
Detektieren (406), während der RFFE-Bus im Leerlauf ist, durch Detektionsschaltkreise (214) an dem Master (200), der mit dem RFFE-Bus assoziiert ist, eines Logisch-Hoch-Zustandes auf der Taktleitung; und
Initiieren (408) einer Interrupt-Anfrage von dem Master.

2. Verfahren nach Anspruch 1, wobei der Schritt des Initiierens der Interrupt-Anfrage den Schritt des Pollings bzw. Abrufens von Slaves aufweist, die mit dem RFFE-Bus assoziiert sind.

3. Verfahren nach Anspruch 1, wobei der Schritt des Initiierens der Interrupt-Anfrage den Schritt des Durchführens eines gewichteten Abrufens von Slaves aufweist, die mit dem RFFE-Bus assoziiert sind.

4. Verfahren nach Anspruch 1, wobei der Schritt des Initiierens der Interrupt-Anfrage den Schritt des Abrufens von nur Slaves aufweist, die mit dem RFFE-Bus assoziiert sind, die autorisiert sind Interrupts vorzusehen.

5. Verfahren nach Anspruch 1, das weiter den Schritt des Betreibens der Taktleitung mit einem Taktsignal aufweist, wenn der RFFE-Bus nicht im Leerlauf ist.

6. Verfahren nach Anspruch 1, wobei der Schritt des Initiierens der Interrupt-Anfrage den Schritt des Initiierens der Interrupt-Anfrage aufweist, bevor eine Periode zum Abrufen verstrichen ist.

7. Verfahren nach Anspruch 1, wobei der Schritt des Initiierens der Interrupt-Anfrage einen der Schritte des Abrufens von Slaves aufweist, die geradzahlige Adressen haben, gefolgt durch das Abrufen von Slaves mit ungeradzahligen Adressen, oder des Abrufens von Slaves mit ungeradzahligen Adressen gefolgt durch das Abrufen der Slaves mit geradzahligen Adressen.

8. Verfahren nach Anspruch 1, wobei der Schritt des Initiierens der Interrupt-Anfrage den Schritt des Verwendens einer Nachschlagetabelle aufweist, um eine Reihenfolge zu definieren, in welcher die Slaves abgerufen werden.

9. Verfahren nach Anspruch 1, wobei der Schritt des Initiierens der Interrupt-Anfrage den Schritt des Abrufens von Slaves basierend auf einer aufsteigenden Adresssequenz aufweist.

10. Verfahren nach Anspruch 1, wobei der Schritt des Initiierens der Interrupt-Anfrage den Schritt des Abrufens von Slaves basierend auf einer abnehmenden Adresssequenz aufweist.

11. Ein Master, der Folgendes aufweist:
eine RFFE-Schnittstelle (RFFE = radio frequency front end bzw. Funkfrequenz-Frontend) (216), die konfiguriert ist an einen RFFE-Bus (102) gekoppelt zu werden;
eine Taktquelle (210), die an die RFFE-Schnittstelle gekoppelt ist;
einen Transceiver (208), der an die RFFE-Schnittstelle gekoppelt ist; und
eine Detektionsschaltung (214), die an die RFFE-Schnittstelle gekoppelt ist und konfiguriert ist zum:
Detektieren, wenn eine Taktleitung (206) des RFFE-Busses durch einen Slave (202), der mit dem RFFE-Bus assoziiert ist, auf ein logisches Hoch gezogen wird; und
Initiieren einer Interrupt-Anfrage durch den Transceiver.

12. Ein Verfahren für eine Slave-Signalisierung eines Interrupts auf einem RFFE-Bus (RFFE = radio frequency front end bzw. Funkfrequenz-Frontend), wobei das Verfahren die folgenden Schritte aufweist:
an dem Slave, der an den RFFE-Bus gekoppelt ist, Detektieren einer Interrupt-Bedingung innerhalb des Slaves;
an dem Slave, Treiben bzw. Setzen einer Taktleitung des RFFE-Busses von einem Leerlaufzustand in einen modifizierten Zustand um die Interrupt-Bedingung an dem Slave gegenüber dem Master anzuzeigen; und
nachfolgendes Antworten auf eine Interrupt-Anfrage von dem Master.

13. Verfahren nach Anspruch 12, wobei der Schritt des Setzens der Taktleitung in den modifizierten Zustand den Schritt des Ziehens der Taktleitung auf einen Logisch-Hoch-Zustand aufweist.

14. Verfahren nach Anspruch 12, wobei der Schritt des Setzens der Taktleitung den Schritt des Abwartens, dass die Taktleitung im Leerlauf ist, vor dem Setzen der Taktleitung aufweist.

15. Ein Slave (202), der Folgendes aufweist:
eine RFFE-Schnittstelle (RFFE = radio frequency front end bzw. Funkfrequenz-Frontend) (226), die konfiguriert ist zum Koppeln an einen RFFE-Bus (102);
einen Transceiver (218), der an die RFFE-Schnittstelle gekoppelt ist; und
eine Interrupt-Schaltung (222), die an die RFFE-Schnittstelle gekoppelt ist, die konfiguriert ist zum:
Empfangen einer Anzeige, dass der Slave eine Interrupt-Bedingung hat; und
Treiben einer Taktleitung (206) des RFFE-Busses von einem Leerlaufzustand in einen modifizierten Zustand.

## Revendications

1. Procédé (400) pour détecter, au niveau d'un maître (200), une interruption d'un esclave (202) sur un bus de frontal radiofréquence, RFFE, (102), le procédé comprenant les étapes consistant à:
maintenir (404) une ligne d'horloge (206) du bus RFFE à un niveau logique bas lorsque le bus RFFE est inactif;
détecter (406), alors que le bus RFFE est inactif, avec des circuits de détection (214) au niveau du maître (200) associés au bus RFFE, un niveau logique haut sur la ligne d'horloge; et
initier (408) une demande d'interruption à partir du maître.

2. Procédé selon la revendication 1, dans lequel l'étape de lancement de l'interrogation d'interruption comprend l'étape d'interrogation des esclaves associée au bus RFFE.

3. Procédé selon la revendication 1, dans lequel l'étape de lancement de l'interruption comprend l'étape consistant à effectuer une interrogation pondérée des esclaves associée au bus RFFE.

4. Procédé selon la revendication 1, dans lequel l'étape de lancement de l'interrogation d'interruption comprend l'étape consistant à interroger uniquement les esclaves associés au bus RFFE qui sont autorisés à fournir des interruptions.

5. Procédé selon la revendication 1, comprenant en outre l'étape de pilotage de la ligne d'horloge avec un signal d'horloge lorsque le bus RFFE n'est pas inactif.

6. Procédé selon la revendication 1, dans lequel l'étape de lancement de l'interrogation d'interruption comprend l'étape de lancement de l'interrogation d'interruption avant qu'une période d'interrogation ne se soit écoulée.

7. Procédé selon la revendication 1, dans lequel l'étape de lancement de l'interrogation d'interruption comprend l'un parmi l'interrogation des esclaves ayant des adresses paires suivi par l'interrogation des esclaves ayant des adresses impaires ou l'interrogation des esclaves ayant les adresses impaires suivi par l'interrogation des esclaves ayant des adresses paires.

8. Procédé selon la revendication 1, dans lequel l'étape de lancement de l'interrogation d'interruption comprend l'étape d'utilisation d'une table de recherche pour définir un ordre dans lequel les esclaves sont interrogés.

9. Procédé selon la revendication 1, dans lequel l'étape de lancement de l'interrogation d'interruption comprend l'étape d'interrogation des esclaves sur la base d'une séquence d'adresses ascendante.

10. Procédé selon la revendication 1, dans lequel l'étape de lancement de l'interrogation d'interruption comprend l'étape d'interrogation des esclaves sur la base d'une séquence d'adresses descendante.

11. Un maître comprenant:
une interface frontale radiofréquence, RFFE, (216) configurée pour être couplée à un bus RFFE (102);
une source d'horloge (210) couplée à l'interface RFFE;
un émetteur-récepteur (208) couplé à l'interface RFFE; et
un circuit de détection (214) couplé à l'interface RFFE et configuré pour:
détecter le moment lorsqu'une ligne d'horloge (206) du bus RFFE est pilotée vers l'état logique haut par un esclave (202) associé au bus RFFE; et
lancer une interrogation d'interruption via l'émetteur-récepteur.

12. Procédé pour un esclave signalant une interruption sur un bus frontal radiofréquence, RFFE, le procédé comprenant les étapes consistant à:
au niveau de l'esclave couplé au bus RFFE, l'étape consistant à détecter une condition d'interruption à l'intérieur de l'esclave;
au niveau de l'esclave, l'étape consistant à piloter une ligne d'horloge du bus RFFE d'un état inactif à un état modifié pour indiquer la condition d'interruption de l'esclave à un maître; et
répondre ensuite à une demande d'interruption à partir du maître.

13. Procédé selon la revendication 12, dans lequel l'étape consistant à piloter la ligne d'horloge à l'état modifié comprend l'étape consistant à faire passer la ligne d'horloge à un niveau logique haut.

14. Procédé selon la revendication 12, dans lequel l'étape de pilotage de la ligne d'horloge comprend l'étape consistant à attendre que la ligne d'horloge soit inactive avant de piloter la ligne d'horloge.

15. Esclave (202) comprenant:
une interface frontale radiofréquence, RFFE, (226) configurée pour être couplée à un bus RFFE (102);
un émetteur-récepteur (218) couplé à l'interface RFFE; et
un circuit d'interruption (222) couplé à l'interface RFFE configuré pour: recevoir une indication que l'esclave présente une condition d'interruption; et
piloter une ligne d'horloge (206) du bus RFFE d'un état inactif à un état modifié.
